# EUROPEAN PATENT APPLICATION

(11) **EP 1 619 886 A1**
(43) Date of publication of application: **25.01.2006**
(21) Application number: 04017368.4
(22) Date of filing: 22.07.2004
(51) Int. Cl.: H04N 5/445, H04N 9/64

(54) **Video format adaptation**

(71) Applicant: Harman Becker Automotive Systems GmbH, 76307 Karlsbad (DE)
(72) Inventor: Link, Hermann, 78166 Donaueschingen (DE); Pfitzner, Mirko, 78050 Villingen-Schwenningen (DE)
(74) Representative: Grünecker, Kinkeldey, Stockmair & Schwanhäusser Anwaltssozietät

(57) **Abstract**

The present invention relates to a particular enhancement of graphic data in order to adapt the vertical resolution to that of video data. This is accomplished by inserting those lines into the graphic data which are to be removed during the further processing of the combined data resulting from a superposition of the graphic and the video data. By employing an inverse Mabiki method, i.e. inserting those lines into the graphic data which are removed when reducing the vertical resolution in accordance with Mabiki-PAL method, a graphic overlay of high picture quality is achieved in a simple and efficient manner.

## Description

The present invention relates to a display controller and a method for superimposing graphic data on video data for display on a display device. In particular, the present invention relates to a video format adaptation of overlaid video data and graphic data having different vertical resolutions.

The overlay of graphic on video data enables the provision of additional information on a single display device. The additional information is particularly used for a user interaction with an information and/or entertainment device providing the video data. The graphic data may represent control buttons of a user interface provided on a touch screen type display or functional information relating to control buttons which are arranged in proximity to the graphic overlay.

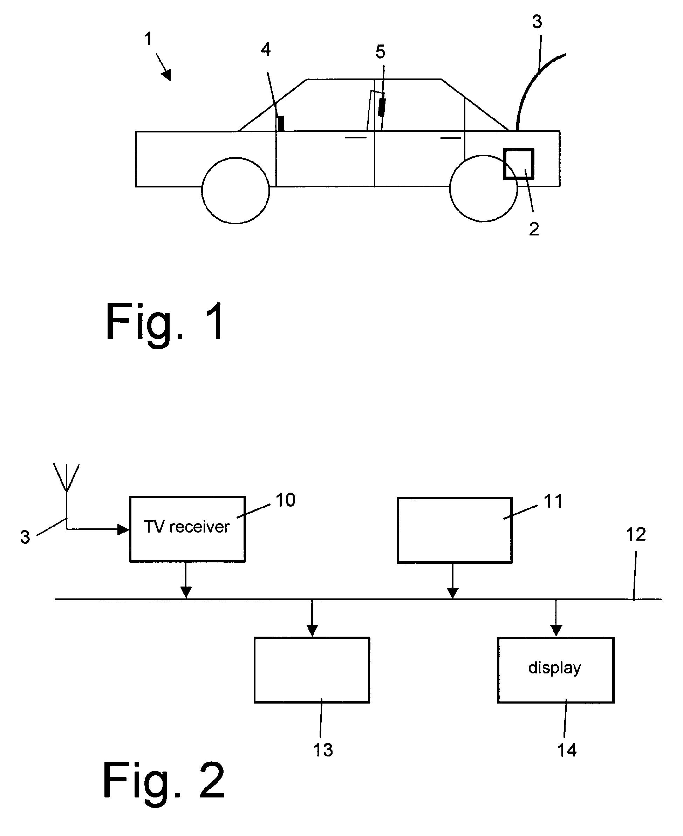

The overlay of graphic on video for providing a user interface is particularly useful in vehicle based information and entertainment systems. The video data together with the graphic data for interaction control purposes is provided on displays that are separately provided for the front seat passengers and the rear seat passengers. The front seat and the rear seat passenger's displays might be controlled separately such that the front seat display is mainly used for a vehicle navigation system whereas the rear seat display is reproducing entertainment information from an on-board television or radio receiver, DVD player, cellular phone, internet access device etc. An example configuration of such displays in a vehicle 1 is illustrated in Fig. 1.

The video data together with the graphic data is generated by the entertainment and information system 2. The entertainment and information system 2 is connected to an antenna 3 for receiving broadcasted video data to be supplied together with graphic data to a front seat display 4 and a rear seat display 5.

The structure of the underlying communication system is depicted in Fig. 2. A bus 12 is connecting the individual communication devices 10, 11 and reproduction devices 13, 14. A person skilled in the art will appreciate that the bus configuration is not limited to a uni-directional data transmission as illustrated in Fig. 2. Alternatively, the data may be transmitted in a bi-directional manner between the connected devices or at least a sub-set of the connected devices.

The video data format is generally in compliance with one of the well-known video standards NTSC, PAL or SECAM. These video standards mainly differ in the application of color encoding methods for broadcasting color video information in addition to the luminance video information. A further basic difference between the television standards NTSC on the one hand side and PAL (and SECAM) on the other hand side is the number of lines per frame. NTSC is based on frames having 525 lines transmitted at a 60 Hz field rate, whereas PAL uses 625 lines per frame transmitted at a 50 Hz field rate. While the number of 525 and 625 lines per frame relates to the transmitted lines, the number of active video lines is smaller, namely only approximately 485 lines for NTSC and 575 lines for PAL. The remaining lines are used for delimiting frame boundaries and for synchronization and other information.

These television standards transmit video data in form of two interlaced fields. The two fields, which are designated odd field and even field, make up one full frame. When these fields are viewed on a monitor by the human eye, they appear as one continuous image. Both fields of a frame are interwoven on the monitor screen. Small LCD monitors for application in portable devices or in vehicles often have a number of lines corresponding to only a single field. For display of interlaced video on such displays, each field is scanned on the same lines of the LCD monitor one after another. As with conventional monitors, the eye integrates these two fields into one complete frame and the resulting image appears to have a full number of lines.

Most of these small size LCD monitors have a number of lines corresponding to the active lines of an NTSC field. When PAL fields are to be displayed on such small size LCD monitors, the 288 active lines of a PAL field are to be reduced to 234 lines/field of the NTSC field size. This is done by removing particular lines based on a method called "Mabiki-PAL".

According to the Mabiki-PAL method, particular lines are removed from each PAL field in accordance with a predefined rule. Typically, the following algorithm is employed for removing lines from a PAL field:
*Even field: (14n* + *12) H, (14n* + *20) H*
*Odd field: (14n* + *17) H, (14n* + *23) H*
*n* = *1, 2,...20*

Accordingly, in an alternate manner each 8^{th} and 6^{th} line is removed (each 14 lines, line 8 and line 6). In order to achieve a more uniform distribution of the removed lines, a 3-line-offset is employed at each line or field switch.

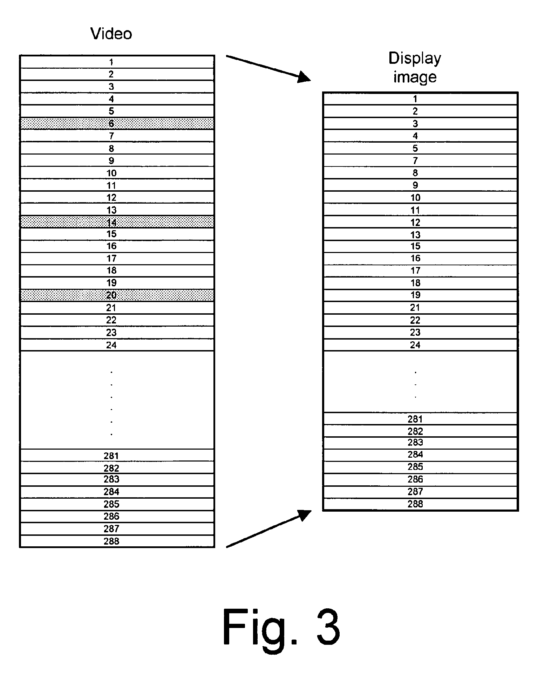

The general approach underlying the Mabiki-PAL method line reduction is illustrated in Fig. 3. In this manner, the larger vertical resolution of a PAL field can be reduced without introducing significant image artifact. Mabiki-PAL can be simply implemented and, thus, represents a cost efficient solution for adapting a display format.

As described earlier, graphic data is overlaid on video data when a single display is used for displaying different kinds of information simultaneously. The graphic data is preferably generated in accordance with the LCD display's vertical resolution, i.e. with a resolution of 234 lines. If however the graphic data is to be overlaid on video data in PAL format, the graphic format has to be adapted to the format of the PAL video data, i.e. to a vertical size of 288 lines and a 50 Hz field rate. For this purpose, the graphic data is preferably generated in accordance with the PAL vertical resolution and superimposed on the PAL video data. The combined image data is then reduced to the smaller LCT display's vertical resolution of 234 lines by employing the Mabiki-PAL method.

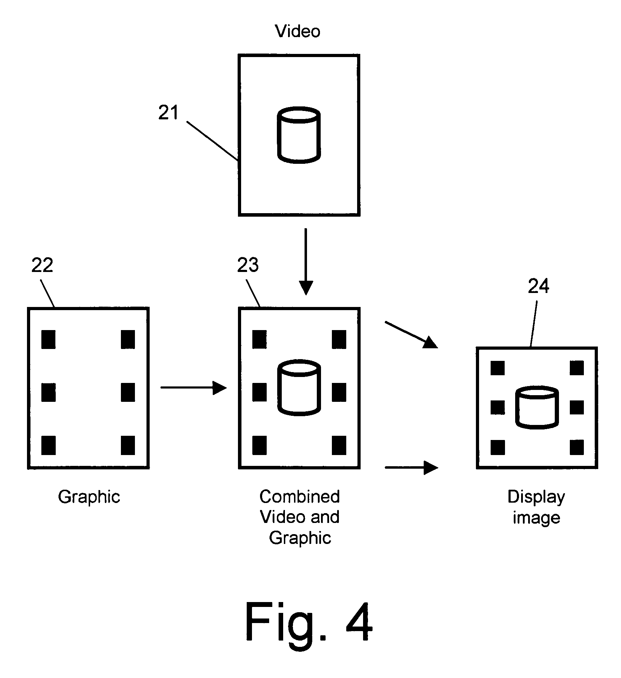

The conventional approach for overlaying graphic data on video and display of the combined data on a display device of a smaller vertical resolution is illustrated in Fig. 4. PAL video data 21 and graphic data 22 created in PAL format are superimposed to form combined video and graphic data 23. In order to adapt the vertical resolution of the combined video and graphic data 23 to the display format, the combined data is subjected to the earlier described Mabiki-PAL method. The resulting image data 24 is displayed on the display device.

It is the drawback of the conventional approach that the graphic data is created with a larger vertical resolution and the removal of individual lines thereof results in image artifacts such as line flicker.

The present invention aims to provide an improved display controller and method for combining video data and graphic data.

This is achieved by the features of the independent claims.

According to a first aspect of the present invention, a display controller is provided for combining first and second image data of different vertical resolutions for display on a display device. The first image data has a number of lines larger than the number of lines of the second image data. The display device has a vertical resolution which corresponds to that of the second image data. The display controller comprises an image enhancement unit, a combining unit, and a thinning unit. The image enhancement unit inserts additional lines into the second image data by repeating individual lines in accordance with a first predefined rule such that the number of lines of the second image data corresponds to the number of lines of the first image data. The combining unit superimposes the first image data and the enhanced second image data. The thinning unit removes individual lines of the superimposed image data in accordance with a second predefined rule to adapt the vertical resolution of the superimposed image to the resolution of the display device. The second predefined rule removes those lines which have been inserted in accordance with the first predefined rule.

According to a further aspect of the present invention, a method is provided for combining first and second image data of different vertical resolutions for display on a display device. The first image data has a number of lines larger than the number of lines of the second image data. The display device has a vertical resolution which corresponds to that of the second image data. The method inserts additional lines into the second image data by repeating individual lines in accordance with a first predetermined rule such that the number of lines of the second image data corresponds to the number of lines of the first image data. The first image data and the enhanced second image data are superimposed. Individual lines of the superimposed image data are removed in accordance with a second predefined rule to adapt the vertical resolution of the superimposed image to the resolution of the display device. The second predefined rule removes those lines which have been inserted in accordance with the first predefined rule.

It is the particular approach of the present invention to enable the use of graphic data which is created in accordance with the display device's format by employing an inverse Mabiki-PAL method. The graphic data of the smaller vertical resolution is adapted to the larger PAL-resolution by inserting additional lines in accordance with the Mabiki-PAL method. The resulting graphic data having an enhanced vertical resolution is combined with the PAL image data. When adapting the vertical size of the combined image to that of the display device, the Mabiki-PAL method removes exactly those lines which have been previously inserted into the graphic image. Accordingly, any image artifact to the graphic data can be avoided and a sharp and smooth graphic overlay is achieved without any line flicker.

Further, the combined image data generated in accordance with the present invention can be employed without any further processing to display devices having the larger vertical resolution of the video data. Thus, the present invention enables that the generation of graphic data to be overlaid on video data does not need to take the vertical size of the output display into account. Moreover, only graphic data of a single vertical resolution is required for displays of different vertical resolutions. Further adaptations of the graphic format are not needed. In addition, the present invention only requires a very limited additional hardware or computational effort.

Preferably, the vertical resolution of the video data is in compliance with the first predefined television standard and the vertical resolution of the graphic data is in compliance with the second predefined television standard. The television standard of the video data is preferably PAL or SECAM, while the vertical resolution of the graphic data is preferably in compliance with the NTSC television standard. Accordingly, a sharp and smooth graphic overlay can be achieved for PAL video data which is displayed on LCDs adapted for the NTSC television standard. Further, the combined data is ready for display on displays of different vertical resolutions without complex conversions or image quality degradations, namely on NTSC and PAL displays. Moreover, graphic data of only a single vertical resolution is needed to provide high quality combined image data for PAL and NTSC standard type displays.

Preferably, the first image data has a resolution between 270 and 290 lines, most preferably of 288 lines, while the second image data has a vertical resolution between 230 and 240 lines, most preferably of 234 lines.

Preferably, the lines which are additionally inserted into the graphic data and which are removed from the combined image data are distributed over the total vertical length of the image. In this manner, the video format adaptation does not lead to any perceivable image artifacts.

Preferably, the inserted/removed lines are in alternate manner each **6** ^{th} and each 8^{th} line.

According to a first preferred embodiment, the present invention preferably comprises a first memory for storing first image data and a second memory for storing the second image data. The image data from the second memory is read out and enhanced before output in order to adapt the image format to that of the first image data.

According to an alternative embodiment, a first memory is provided for storing the first image data and a second memory for storing the enhanced second image data. The image data of the second memory is already adapted to comply with the image format of the image data of the first memory.

Further embodiments of the present invention are the subject-matter of the dependent claims.

Additional features and advantages of the present invention will become apparent from the following and more particular description as illustrated in the accompanying drawings, wherein:
Fig. 1 schematically illustrates the distribution of devices of vehicle entertainment and information equipment within a vehicle,
Fig. 2 illustrates in block diagram form a hardware configuration of vehicle entertainment and information equipment,
Fig. 3 schematically illustrates the Mabiki-PAL method for adapting the vertical image resolution,
Fig. 4 schematically illustrates a conventional processing method for displaying PAL video data with overlaid graphic data on a NTSC format display device,
Fig. 5 schematically illustrates the format adaptation processing of graphic data from the NTSC format to the PAL format and back to the NTSC format in accordance with the present invention, and
Fig. 6 schematically illustrates the processing of NTSC graphic data to be overlaid on PAL video data wherein the combined image data is displayed on a NTSC format display device in accordance with the present invention.

Illustrative embodiments of the present will now be described with reference to the drawings.

In accordance with the present invention, graphic data is provided with a vertical resolution of n x 234 pixels. Irrespective of the kind of display device employed, either a display device having a PAL vertical resolution or a display device having a NTSC vertical resolution, graphic data is only provided with a NTSC vertical resolution (or a multiple thereof). The 234 line graphic data are enhanced to a vertical size of 288 lines. For this purpose, the present invention employs an inverse Mabiki-PAL method inserting exactly those lines which are later removed by the Mabiki-PAL method applied in the further image processing path. In this manner, the original resolution of the graphic data can be maintained and a sharp and smooth graphic overlay achieved without line flicker.

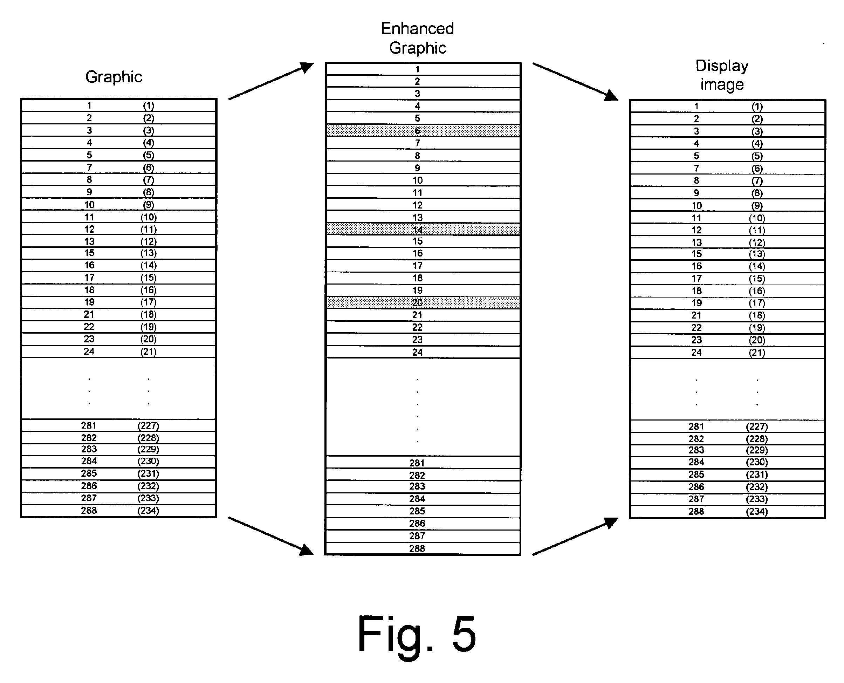

The particular approach of the present invention to enhance the provided graphic data for overlay on PAL video data is schematically illustrated in Fig. 5. The graphic data to be overlaid on the PAL video data is provided with a 234 line vertical resolution. In the schematic line representation of Fig. 5, a consecutive line numbering is provided in brackets. In addition, a line numbering indicating each line's position within the later enhanced vertical image is provided without brackets.

For enhancing the vertical resolution of the graphic data, those line numbers missing in the left hand image of Fig. 5 are generated by repeating the previous line. This is preferably achieved by repeating each 6^{th} and 8th line in alternate manner. The repeated lines are highlighted in the enhanced image by a dark background color.

The enhanced graphic data has a vertical resolution corresponding to that of the PAL video data. After a combination of the enhanced graphic data and the video data, the superimposed image data is reduced in vertical direction in order to enable a display on a 234 line display device. For this purpose, the Mabiki-PAL method is employed removing exactly those lines of the graphic data which had previously been introduced in order to enhance the vertical resolution.

In this manner, the picture quality of the graphic information can be maintained when adapting the display format. Further, the combined image data is compatible to all kinds of display sizes, in particular for display on display devices which do not require the application of the Mabiki-PAL method, for instance CRTs. The artifacts which may appear resulting from the inverse Mabiki-PAL method in accordance with the present invention are generally not perceived by the viewers.

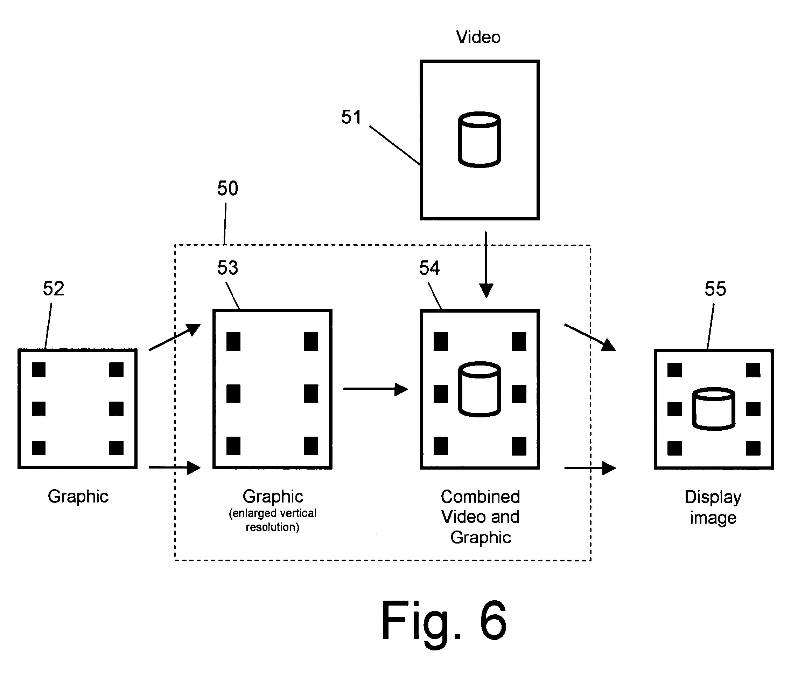

The processing of a display controller 15 in accordance with the present invention is schematically illustrated in Fig. 6. Graphic data 52 is provided having a vertical resolution which preferably corresponds to that of the output display device. In order to adapt the vertical resolution of the graphic data 52 to that of the video data 51, graphic controller 50 generates enhanced graphic data 53 having an enlarged vertical resolution from input graphic data 52.

This is accomplished by reading those video lines twice from the graphic memory for inserting the additional lines in accordance with the inverse Mabiki-PAL method of the present invention.

Alternatively, the enhancement is accomplished by storing the enhanced graphic data 53 in a memory of display controller 50. When receiving input graphic data 52, the additional lines are written twice into the memory. Thus, the inverse Mabiki method is implemented by only employing a single memory storing either the original or the enhanced graphic data wherein the additional lines are generated by a repeated reading/writing procedure from/to the memory.

The enlarged graphic data 53 is combined with PAL video data 51 to generate the combined video and graphic data 54.

In order to be able to display the combined graphic and video data on a NTSC display device, the vertical resolution of the combined data 54 is reduced by employing the Mabiki-PAL method as described earlier for obtaining combined video data 55 having a "thinned out" vertical resolution.

While the method of the present invention has been described for two particular vertical resolutions, namely those of a PAL image and a NTSC image, these vertical resolutions are only a particular example for implementing the present invention. The skilled person is aware that any number of lines, i.e. different vertical resolutions, can be processed in accordance with the present invention. The number of 234 and 288 lines are only illustrative examples for the description of the present invention.

The inverse Mabiki method of the present invention is preferably implemented in form of an FPGA and employed for video reproduction in vehicle entertainment and information systems. The method of the present invention particularly serves for displaying video data stemming from a vehicle television receiver. The graphic data enables the control of the television tuner or other functions provided by the vehicle entertainment and information system. The graphic data preferably enables an interactive control thereof.

Summarizing, the present invention relates to a particular enhancement of graphic data in order to adapt the vertical resolution to that of video data. This is accomplished by inserting those lines into the graphic data which are to be removed during the further processing of the combined data resulting from a superposition of the graphic and the video data. By employing an inverse Mabiki method, i.e. inserting those lines into the graphic data which are removed when reducing the vertical resolution in accordance with Mabiki-PAL method, a graphic overlay of high picture quality is achieved in a simple and efficient manner.

## Claims

1. A display controller for combining first and second image data of different vertical resolutions for display on a display device, said first image data having a number of lines larger than the number of lines of said second image data, and said display device having a vertical resolution corresponding to that of said second image data, said display controller comprising:
an image enhancement unit for inserting additional lines into said second image data by repeating individual lines in accordance with a first predefined rule such that the number of lines of said second image data corresponds to the number of lines of said first image data,
a combing unit for superimposing said first image data and said enhanced second image data, and
a thinning unit for removing individual lines of said superimposed image data in accordance with a second predefined rule to adapt the vertical resolution of said superimposed image to the resolution of said display device, said second predefined rule removing those lines which have been inserted in accordance with said first predefined rule.

2. A display controller according to claim 1, wherein said first image data is video data and said second image data is graphic data.

3. A display controller according to claim 2, wherein the vertical resolution of said video data is in compliance with a first predefined television standard.

4. A display controller according to claim 2 or 3, wherein the vertical resolution of said graphic data is in compliance with a second predefined television standard.

5. A display controller according to any of claims 2 to 4, wherein said first predefined television standard is PAL or SECAM and said second predefined television standard is NTSC.

6. A display controller according to any of claims 2 to 5, wherein said first image data having a vertical resolution between 270 and 290 lines, preferably 288 lines, and said second image data having a vertical resolution between 230 and 240 lines, preferably 234 lines.

7. A display controller according to any of claims 1 to 6, wherein the lines inserted and removed in accordance with said first and said second predefined rules are distributed over the total image length in vertical direction.

8. A display controller according to claim 7, wherein the lines inserted and removed in accordance with said first and said second predefined rules are consecutively each sixth and each eighth line when said first predefined television standard is PAL or SECAM and said second predefined television standard is NTSC.

9. A display controller according to any of claims 1 to 8, further comprising:
a first memory for storing said first image data, and
a second memory for storing said second image data,
wherein said image enhancement unit obtaining from said second memory said second image data to be output wherein said image enhancement unit repeatedly outputting those lines to be additionally inserted into the second image data.

10. A display controller according to any of claims 1 to 8, further comprising:
a first memory for storing said first image data, and
a second memory for storing said enhanced second image data,
wherein said image enhancement unit outputting said second image data to said second memory wherein said image enhancement unit repeatedly outputting those lines to be additionally inserted into the second image data to said second memory.

11. A display controller according to any of claims 1 to 10, wherein said display device being a LCD display.

12. A vehicle information and entertainment device including a display device and a display controller in accordance with any of claims 1 to 11 for displaying video data and graphic data superimposed on said display device.

13. A method for combining first and second image data of different vertical resolutions for display on a display device, said first image data having a number of lines larger than the number of lines of said second image data, and said display device having a vertical resolution corresponding to that of said second image data, said method comprising the steps of:
inserting additional lines into said second image data by repeating individual lines in accordance with a first predefined rule such that the number of lines of said second image data corresponds to the number of lines of said first image data,
superimposing said first image data and said enhanced second image data, and
removing individual lines of said superimposed image data in accordance with a second predefined rule to adapt the vertical resolution of said superimposed image to the resolution of said display device, said second predefined rule removing those lines which have been inserted in accordance with said first predefined rule.

14. A method according to claim 13, wherein said first image data is video data and said second image data is graphic data.

15. A method according to claim 14, wherein the vertical resolution of said video data is in compliance with a first predefined television standard.

16. A method according to claim 14 or 15, wherein the vertical resolution of said graphic data is in compliance with a second predefined television standard.

17. A method according to any of claims 14 to 16, wherein said first predefined television standard is PAL or SECAM and said second predefined television standard is NTSC.

18. A method according to any of claims 14 to 17, wherein said first image data having a vertical resolution between 270 and 290 lines, preferably 288 lines, and said second image data having a vertical resolution between 230 and 240 lines, preferably 234 lines.

19. A method according to any of claims 13 to 18, wherein the lines inserted and removed in accordance with said first and said second predefined rules are distributed over the total image length in vertical direction.

20. A method according to claim 19, wherein the lines inserted and removed in accordance with said first and said second predefined rules are consecutively each sixth and each eighth line when said first predefined television standard is PAL or SECAM and said second predefined television standard is NTSC.

21. A method according to any of claims 13 to 20, further comprising the steps of:
storing said first image data in a first memory,
storing said second image data in a second image memory,
outputting said second image data from said second memory wherein those lines to be additionally inserted into the second image data are repeatedly output.

22. A method according to any of claims 13 to 20, further comprising the steps of:
storing said first image data in a first memory, and
storing said enhanced second image data in a second image memory, wherein those lines to be additionally inserted into said second image data are repeatedly stored.
